# EUROPEAN PATENT APPLICATION

(11) **EP 4 506 200 A1**
(43) Date of publication of application: **12.02.2025**
(21) Application number: 23205970.9
(22) Date of filing: 26.10.2023
(51) Int. Cl.: B60L 3/12, B60L 7/10, B60L 50/60, B60L 53/24, B60L 58/12, B60L 58/22, H02J 7/00, H02J 7/02, H02J 7/14, B60L 3/00, B60L 3/04, B60L 58/21, B60W 20/13, B60W 20/50, B60W 30/18, G01R 31/387

(54) **METHOD AND SYSTEM FOR BATTERY MANAGEMENT OF ELECTRIC MOBILITY**

(30) Priority: 11.08.2023 KR 20230105355
(71) Applicant: HL Mando Corporation, Pyeongtaek-si, Gyeonggi-do 17962 (KR)
(72) Inventor: Park, Chanheung, Hwaseong-si, Gyeonggi-do (KR)
(74) Representative: BCKIP Part mbB

(57) **Abstract**

A method and system for battery management of an electric mobility are provided. The method for battery management of the electric mobility may comprise: receiving information related to states of charge (SOCs) of a plurality of batteries installed in the electric mobility; determining whether a difference between a SOC of a first battery having a highest SOC and a SOC of a second battery having a lowest SOC among the plurality of batteries exceeds a predetermined threshold value; and controlling charge and/or discharge of at least one of the plurality of batteries by controlling power flow of at least one of a plurality of converters connected to the plurality of batteries.

## Description

This application claims the benefit of and priority to Korean Patent Application No. 2023-0105355 filed on August 11, 2023.

### TECHNICAL FIELD

The present disclosure generally relates to a method and system for battery management of an electric mobility. More specifically, the present disclosure relates to a method and system for battery management for efficiently balancing states of charge (SOCs) of batteries in an electric mobility equipped with a plurality of batteries.

### BACKGROUND

An electric mobility, such as an electric bicycle or an electric cargo (e-cargo), assists a person, or is driven by a motor operated with electricity. Since the electric mobility uses electric energy, a battery is an important component for supplying power.

While a single battery (a battery pack) may be used to drive the electric mobility, a plurality of batteries may be also used to drive the electric mobility in order to achieve energy efficiency.

Meanwhile, in case of an electric mobility in which a plurality of batteries are installed, SOC (state of charge) of each battery may be different from each other as the electric vehicle is being driven. Alternatively, batteries having different SOCs may be initially installed in the electric mobility at the time of installation.

In this regard, a case where it is difficult to drive the electric vehicle normally due to the level of SOC of at least one battery among the plurality of batteries may occur. In this case, the driving distance of the electric mobility may be reduced even though the SOCs of other batteries remain sufficient.

In addition, when driving the motor using only one or some batteries with sufficient SOCs due to insufficient SOCs of some batteries, the maximum torque and output of the motor during the driving of electric mobility may be reduced compared to the case of using all batteries.

Therefore, the electric mobility using a plurality of batteries needs a method and system for battery management of the electric mobility to balance the SOCs of the batteries.

### SUMMARY

The present disclosure may be to provide a method and system for battery management for improving the driving performance of an electric mobility by balancing the SOCs of the plurality of batteries in the electric mobility using the plurality of batteries.

In addition, the present disclosure may be to provide a method and system for battery management capable of improving the output and driving time of an electric mobility by balancing the plurality of batteries more rapidly and effectively by balancing the SOCs of the plurality of batteries.

However, the technical problem to be achieved by the embodiments of the present disclosure is not limited to the technical problems described above, and other technical problems may exist.

A method for battery management of an electric mobility according to an embodiment of the present disclosure comprises: receiving SOC (state of charge) information of a plurality of batteries installed in the electric mobility; determining whether a difference between a SOC of a first battery having the highest SOC and a SOC of a second battery having the lowest SOC among the plurality of batteries exceeds a predetermined threshold value; and controlling charging or discharging of at least one of the plurality of batteries by controlling power flow of at least one converter among a plurality of converters connected to the plurality of batteries.

Further, the plurality of converters may be bidirectional converters, and the plurality of converters may include a first bidirectional converter connected to the first battery and a second bidirectional converter connected to the second battery.

Further, if the difference between the SOC of the first battery and the SOC of the second battery exceeds the predetermined threshold value, the controlling of charging or discharging of at least one of the plurality of batteries may include controlling charging or discharging of the first battery and the second battery by controlling power flows of the first bidirectional converter and the second bidirectional converter.

Further, if the difference between the SOC of the first battery and the SOC of the second battery does not exceed the predetermined threshold value, the controlling of charging or discharging of at least one of the plurality of batteries may include charging the second battery by supplying power from a generator to the second battery by controlling only power flow of the second bidirectional converter until the SOC of the second battery and the SOC of the first battery become the same.

Further, the controlling of charging or discharging of at least one of the plurality of batteries may include discharging the first battery by supplying power from the first battery to a generator by controlling power flow of the first bidirectional converter, and charging the second battery by supplying power from the generator to the second battery by controlling power flow of the second bidirectional converter, until the SOC of the first battery and the SOC of the second battery become the same.

Further, the controlling of charging or discharging of at least one of the plurality of batteries may include discharging the first battery by supplying power from the first battery to a generator by controlling power flow of the first bidirectional converter, and charging the second battery by supplying power from the generator to the second battery by controlling power flow of the second bidirectional converter, until the difference between the SOC of the first battery and the SOC of the second battery becomes equal to or less than the predetermined threshold value.

Further, the method may further comprise: after controlling charging or discharging of at least one of the plurality of batteries, determining whether the SOCs of the plurality of batteries are all the same, and the controlling of charging or discharging of at least one of the plurality of batteries may be performed until all the SOCs of the plurality of batteries become the same.

Further, the method may further comprise: after determining whether the SOCs of the plurality of batteries are all the same; determining whether a system is normal.

Further, the determining of whether the system is normal may include determining that the system is abnormal in case that a current generated by a generator is overcurrent, in case that a voltage of at least one battery among the plurality of batteries is out of a range of a usable voltage of the system, or in case that a temperature of at least one system component is out of an operating temperature range.

Further, if it is determined that the system is abnormal, a warning may be issued to a driver indicating that the system is abnormal.

A system for battery management of the electric mobility according to an embodiment of the present disclosure comprises: a generator configured to generate voltage by driving a pedal; a plurality of batteries installed in the electric mobility; a plurality of motors mounted on at least one of front and rear wheels of the electric mobility to provide rotational force to the wheels; a plurality of converters configured to convert voltages of the plurality of batteries; and a control unit configured to control the system, wherein the control unit is configured to receive SOC (state of charge) information of the plurality of batteries, determine whether a difference between a SOC of a first battery having the highest SOC and a SOC of a second battery having the lowest SOC among the plurality of batteries exceeds a predetermined threshold value, and control charging or discharging of at least one battery among the plurality of batteries by controlling power flow of at least one converter among the plurality of converters.

Further, the plurality of converters may be bidirectional converters, and the plurality of converters may include a first bidirectional converter connected to the first battery and a second bidirectional converter connected to the second battery.

Further, if the difference between the SOC of the first battery and the SOC of the second battery exceeds the predetermined threshold value, the control unit may be configured to control power flows of the first bidirectional converter and the second bidirectional converter to control charging or discharging of the first battery and the second battery.

Further, if the difference between the SOC of the first battery and the SOC of the second battery does not exceed the predetermined threshold value, the control unit may be configured to perform charging of the second battery by supplying power from the generator to the second battery by controlling only power flow of the second bidirectional converter until the SOC of the first battery and the SOC of the second battery become the same.

Further, the system may further comprise an interface comprising a display, and the control unit may be configured to control charging or discharging of at least one of the plurality of batteries until all the SOCs of the plurality of batteries become the same, and if the SOCs of the plurality of batteries are all the same, the control unit may be configured to determine whether the system is normal, and if it is determined that the system is abnormal, the control unit may be configured to issue a warning indicating that the system is abnormal on the display of the interface.

The above-described means for solving the problem is only exemplary and should not be construed as limiting the present disclosure. In addition to the exemplary embodiments described above, additional embodiments may exist in the drawings and detailed description of the present disclosure.

According to certain embodiments of the present disclosure, a method and system for battery management of an electric mobility may be capable of improving the driving performance of the electric mobility by balancing the SOCs of the plurality of batteries installed in the electric mobility.

In addition, according to some embodiments of the present disclosure, a method and system for battery management of an electric mobility may be capable of balancing the batteries rapidly and effectively by balancing the SOCs of the batteries by controlling the power flow of the plurality of converters connected to the plurality of batteries.

However, the effects obtainable from the present disclosure are not limited to the effects described above, and other effects may exist.

### BRIEF DESCRIPTION OF THE DRAWINGS

FIG. 1 is a flowchart for illustrating a method for battery management of an electric mobility according to embodiments of the present disclosure.
FIG. 2 is a flowchart for illustrating a method for battery management of an electric mobility according to a first embodiment of the present disclosure.
FIG. 3 is a flowchart for illustrating a method for battery management of an electric mobility according to a second embodiment of the present disclosure.
FIG. 4 is a block diagrams for schematically illustrating a system for battery management of an electric mobility having two batteries according to embodiments of the present disclosure.
FIG. 5 is a block diagrams for schematically illustrating a system for battery management of an electric mobility having three or more batteries according to embodiments of the present disclosure.
FIG. 6 shows experimental examples of a method for battery management of an electric mobility according to a first embodiment of the present disclosure in an exemplary embodiment in which a system for battery management of the electric mobility has two batteries.
FIG. 7 shows experimental examples of a method for battery management of an electric mobility according to a second embodiment of the present disclosure in an example in which a system for battery management of the electric mobility has two batteries.
FIG. 8 shows experimental examples of a method for battery management of an electric mobility according to a first embodiment of the present disclosure in an example in which a system for battery management of the electric mobility has three batteries.
FIG. 9 shows experimental examples of a method for battery management of an electric mobility according to a second embodiment of the present disclosure in an example in which a system for battery management of the electric mobility has three batteries.

### DETAILED DESCRIPTION

Hereinafter, with reference to the accompanying drawings, embodiments of the present disclosure will be described in detail so that those skilled in the art can easily practice the embodiments. However, the present disclosure may be implemented in many different forms and is not limited to the embodiments described herein. In addition, in order to clearly describe the present disclosure in the drawings, parts irrelevant to the description are omitted, and similar reference numerals are attached to similar parts throughout the present disclosure.

Throughout the present disclosure, if a part is said to be "connected" to another part, it is not only "directly connected", but also "electrically connected" with another element in between, including cases where they are "indirectly connected".

Throughout the present disclosure, if one member is said to be located "on", "above", "under", or "below" the other member, this includes not only the case of being in contact with the other member, but also the case that another member is positioned between the two members.

Throughout the present disclosure, if a part "includes" a certain component, it does not mean excluding other components, and it does mean that it may further include other components, unless otherwise stated.

Various embodiments of the present disclosure generally relate to a method and system for battery management for improving driving performance in an electric mobility equipped with a plurality of batteries by efficiently balancing the SOCs of the batteries.

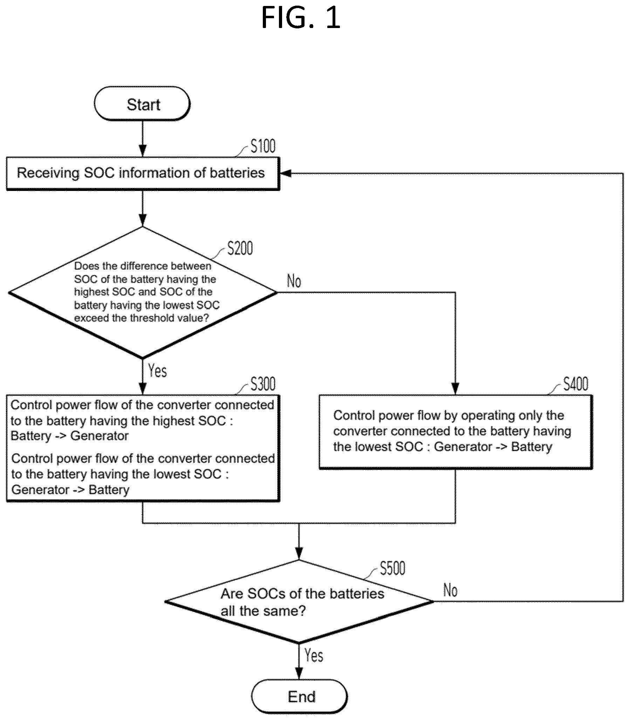

FIG. 1 is a flowchart for illustrating a method for battery management of an electric mobility according to an embodiment of the present disclosure.

Referring to FIG. 1, the method for battery management of the electric mobility according to an embodiment of the present disclosure may include collecting SOC information of a plurality of batteries installed in the electric mobility (operation S100). The SOC information of the batteries may be collected from sensors provided in or connected to each of the plurality of batteries.

Subsequently, the method for battery management of the electric mobility according to an embodiment of the present disclosure may include determining whether the difference in SOCs between a battery having the highest SOC (hereinafter referred to as a "first battery") and a battery having the lowest SOC (hereinafter referred to as a "second battery") among the plurality of batteries exceeds a predetermined threshold value (S200).

In addition, the method for battery management of the electric mobility according to an embodiment of the present disclosure may include controlling the charging or discharging of at least one battery among the plurality of batteries by controlling the power flow in at least one converter among the plurality of converters connected to the plurality of batteries (operations S300, S400).

Here, it is preferable that the plurality of converters are bidirectional converters. For instance, the bidirectional converter is a power conversion device in which the power flow can be controlled in various ways with being connected to a battery, a generator (ePedal), and/or a motor.

For example, the bidirectional converter may be controlled to charge the battery by controlling the power flow from the generator (ePedal) to the battery, or to discharge the battery by controlling the power flow from the battery to the generator. In addition, the bidirectional converter may control the bidirectional power flow between the generator and the motor or the bidirectional power flow between a plurality of batteries.

Meanwhile, the plurality of bidirectional converters may include a bidirectional converter connected to the first battery having the highest SOC (hereinafter referred to as a "first bidirectional converter") and a bidirectional converter connected to the second battery having the lowest SOC (hereinafter referred to as a "second bidirectional converter").

Further, the operation of controlling the charging or discharging of at least one battery among the plurality of batteries may include, if the difference in the SOCs between the first battery and the second battery exceeds the predetermined threshold value, controlling the power flow of the first bidirectional converter and the second bidirectional converter to control the charging or discharging of the first battery and the second battery.

Specifically, the power may be supplied from the first battery to the generator by controlling the power flow of the first bidirectional converter to discharge the first battery, and the power may be supplied from the generator to the second battery by controlling the power flow of the second bidirectional converter to charge the second battery (operation S300).

In this way, by performing the discharging of the battery having the highest SOC and the charging of the battery having the lowest SOC, the SOCs of the first battery having the highest SOC and the second battery having the lowest SOC can be rapidly and effectively balanced.

On the other hand, if the difference in SOCs between the first battery and the second battery is equal to or less than the predetermined threshold value (or if the difference in SOCs between the first battery and the second battery does not exceed the predetermined threshold value), only the second bidirectional converter connected to the second battery having the lowest SOC may be operated to control the power flow from the generator to the battery to charge the second battery (operation S400).

Thereafter, it is determined whether all of the SOCs of the plurality of batteries are the same or substantially the same as each other (operation S500), and the controlling of the power flow as described above may be performed until all of the SOCs of the plurality of batteries are the same or substantially the same as each other. If all of the SOCs of the plurality of batteries are not the same or substantially the same as each other ('No' in operation S500), the operation S100 of collecting SOC information of the plurality of batteries is performed and the control of charging or discharging of the batteries may be repeated until all of the SOCs of the plurality of batteries are the same or substantially the same as each other. If all of the SOCs of the plurality of batteries are the same or substantially the same as each other ('Yes' in operation S500), one cycle of the battery management of the electric mobility may be terminated.

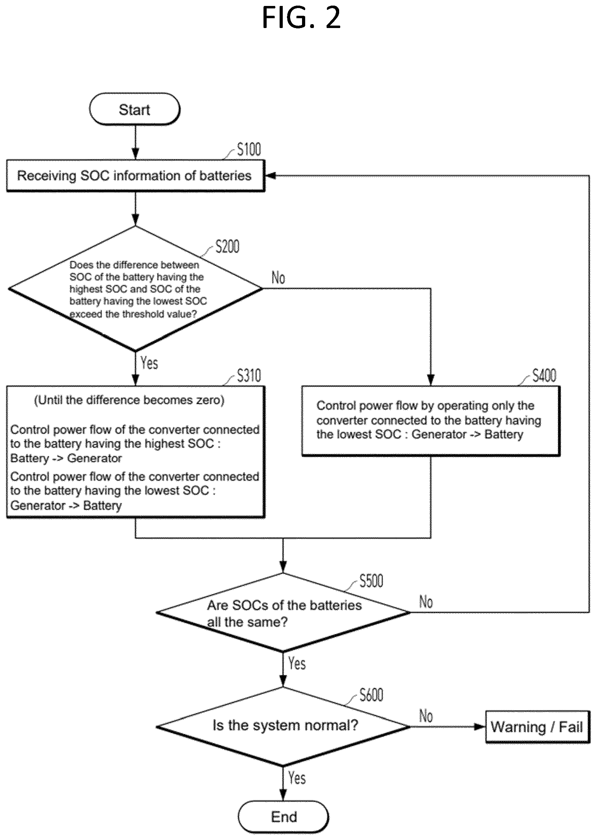

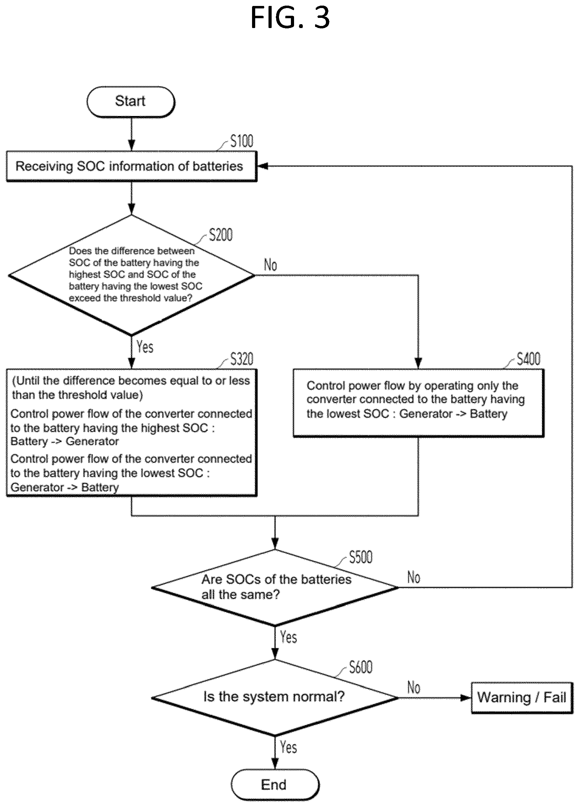

FIG. 2 is a flowchart for illustrating a method for battery management of an electric mobility according to a first embodiment of the present disclosure, and FIG. 3 is a flowchart for illustrating a method for battery management of an electric mobility according to a second embodiment of the present disclosure.

Referring to FIG. 2, according to the method for battery management of the electric mobility according to the first embodiment of the present disclosure, if the difference between the SOC of the first battery having the highest SOC and the SOC of the second battery having the lowest SOC exceeds the predetermined threshold value, the first battery having the highest SOC may be discharged by controlling the power flow of the first bidirectional converter, and the second battery having the lowest SOC may be charged by controlling the power flow of the second bidirectional converter, until the SOC of the first battery and the SOC of the second battery are the same as each other (i.e., until the difference between the SOCs becomes zero) (operation S310).

By controlling the discharging of the first battery and controlling the charging of the second battery in this way, the SOCs of the first battery and the second battery may be more rapidly balanced.

Referring to FIG. 3, according to the method for battery management of the electric mobility according to the second embodiment of the present disclosure, if the difference between the SOC of the first battery having the highest SOC and the SOC of the second battery having the lowest SOC exceeds a predetermined threshold value, the first battery having the highest SOC may be discharged by controlling the power flow of the first bidirectional converter, and the second battery may be charged by controlling the power flow of the second bidirectional converter, until the difference between the SOC of the first battery and the SOC of the second battery is equal to or less than the predetermined threshold value (i.e., until the difference in the SOCs reaches a predetermined threshold value) (operation S320).

By first reducing the difference between the SOC of the first battery and the SOC of the second battery through the controlling of the discharging of the first battery and the controlling of the charging of the second battery, and then by balancing the SOCs of the plurality of batteries through the additional control, the SOCs of the plurality of batteries may be balanced at the higher level of the SOC.

In the first and second embodiments of the present disclosure, if the difference between the SOC of the first battery having the highest SOC and the SOC of the second battery having the highest SOC does not exceed the predetermined threshold value (e.g., in the case that the difference in SOCs is equal to or less than the predetermined threshold value), only the control of charging the second battery may be performed until the SOCs of the first battery and the second battery are the same or substantially the same as each other (operation S400).

As shown in FIG. 1, after controlling the charging and/or discharging of the first battery and the second battery (operation S310, S320, S400), it may be determined whether the SOCs of all batteries are the same as each other (operation S500), and if they are not the same ('No' in operation S500), the SOC balancing control of the batteries may be performed again or repeated.

On the other hand, if the SOCs of all batteries become the same as each other by the balancing control ('Yes' in operation S500), a system normality determination operation S600 of determining whether a system for battery management is normal may be additionally performed (see FIGS. 2 and 3).

The system normality determination step S600 is to determine whether the system for the battery management can operate normally through the diagnosis of system components. For example, in case that the current generated by the generator is overcurrent, in case that the voltage of at least one battery among the plurality of batteries is out of the range of the usable voltage of the system for the battery management, or in case that the temperature of at least one system component is out of an operatable temperature range, the system for the battery management may be determined to be abnormal.

As shown in FIGS. 2 and 3, if it is determined that the battery system is abnormal in operation S600 ('No' in operation S600), since the system for the battery management cannot operate normally, a warning may be output to the driver to notify that the system for the battery management is abnormal ('Warning' status), or the system for the battery management may not operate ('Fail' status). On the other hand, if it is determined that the system is normal ('Yes' in operation S600), one cycle of the battery management may be terminated.

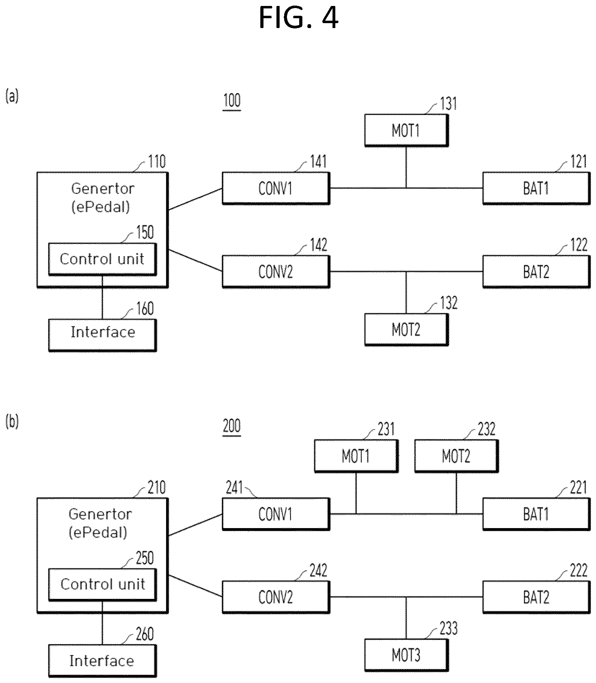

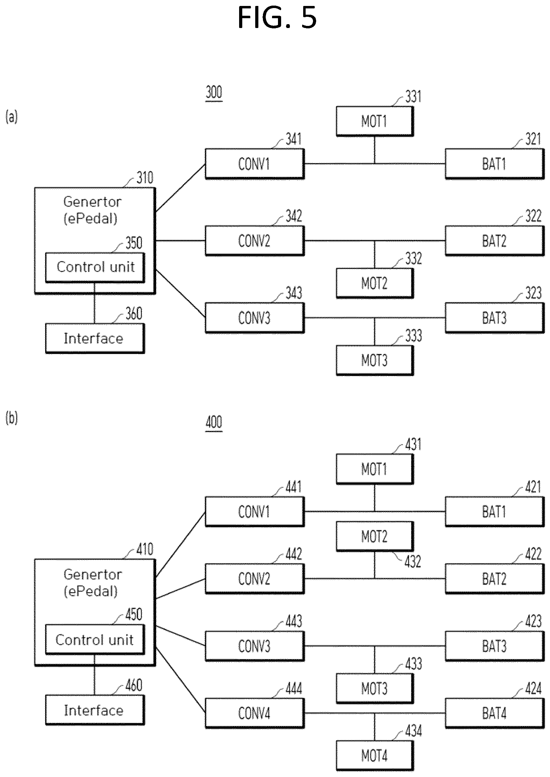

FIGS. 4 and 5 are configuration diagrams for schematically showing systems for battery management according to embodiments of the present disclosure.

In systems for battery management according to embodiments of the present disclosure, the generator may be, for example, but not limited to, ePedal, and may be configured to provide a pedal feeling and a driving feeling to the driver, and convert kinetic energy into electrical energy by rotating the pedal by the driver.

A battery is configured to supply power to devices included in or associated with the electric mobility such as a generator, a motor and an interface, and the driving distance and the output of the electric mobility can be improved by connecting and installing a plurality of batteries to the electric mobility.

Further, a motor may be configured to drive one or more wheels of the electric mobility using the electric energy, and the energy generated during braking may be charged to the battery through the regenerative braking function of the motor.

A converter is a power conversion device configured to control the power flow. For example, a bidirectional converter may be used as a preferred embodiment and may enable various power flows to control the charging and discharging of the plurality of batteries.

FIG. 4 is block diagrams for schematically illustrating a system for battery management of an electric mobility having two batteries according to embodiments of the present disclosure.

Referring to FIG. 4(a), a system 100 for battery management of an electric mobility according to an embodiment of the present disclosure may include a generator 110 configured to generate voltage or power by a driver's driving a pedal. Further, the system 100 for battery management may include two batteries 121 and 122 and two converters 141 and 142 connected to the batteries 121 and 122, respectively. In addition, each of two motors 131 and 132 may be connected to a respective one of two batteries 121 and 122 and a respective one of two converters 141 and 142.

Further, the generator 110 may include a control unit or controller 150 (e.g. a processor) configured to control the system 100 for battery management. While the control unit 150 is illustrated as being included in the generator 110 in FIGS. 4 and 5, the present disclosure is not limited thereto, and the control unit 150 may be provided as a separate component from the generator 110.

Meanwhile, according to the embodiments of the method for battery management of the electric mobility described above, the control unit 150 may collect the SOC information of the batteries 121 and 122. After determining whether the difference in the SOCs between a battery with a higher SOC and a battery with a lower SOC among two batteries 121 and 122 exceeds a predetermined threshold value, the control unit 150 may control the power flow of at least one of the converters 141 and 142 so that the SOCs of the two batteries 121 and 122 can be the same or substantially the same as each other.

Also, the system 100 for battery management of the electric mobility according to an embodiment of the present disclosure may include an interface 160. For example, the interface 160 may be a human machine interface (HMI) including a display such as a touch panel.

In order to determine whether the system 100 for battery management is normal, the current state of the generator 110, the voltage state of the batteries 121 and 122 and/or the temperature of each component of the system 100 (e.g., the generator 110, the batteries 121 and 122, the motors 131 and 132, and the converters 141 and 142) may be monitored. For example, the current of the generator 110 may be sensed by the current sensor of the generator 110, the voltage of the battery 121, 122 may be sensed by one or more voltage sensors of the battery 121, 122, and the temperature of each component of the system 100 may be sensed by at least one temperature sensor.

Accordingly, if it is determined that the system 100 is abnormal (e.g., cases that the current generated by the generator 110 is overcurrent, the voltage of at least one of the plurality of batteries 121 and 122 is undervoltage or overvoltage out of the range of the usable voltage for the system 100, or the temperature of at least one component of the system 100 is out of an operable temperature range), a warning may be output to the driver through the display of the interface 160.

In addition to the visual warning through the display of the interface 160, an audible warning may also be output through a speaker so that the driver is informed of the abnormal state of the system 100, and if the system 100 cannot be operated due to the abnormal state of the system 100, the system 100 may not be operated along with issuing the warning.

Referring to FIG. 4(b), a system 200 for battery management of the electric mobility according to embodiments of the present disclosure shown in FIG. 4(b) may include a generator 210, a controller 250 and an interface 260, and may further include two batteries 221 and 222 and two converters 241 and 242 like the embodiment of FIG. 4(a), but may include three motors 231, 232 and 233 unlike the embodiment of FIG. 4(a).

In the embodiment of FIG. 4(b), a plurality of (two) motors 231 and 232 are connected to one converter 241 among the plurality of converters 241 and 242. This is the case where at least one of the front or rear wheels of the electric mobility is in plural number (e.g. two), and two motors 231 and 232 connected to one converter 241 may be motors provided on two wheels positioned on one side of the front side or the rear side of the electric mobility.

In this way, by providing a plurality of motors 231 and 232, in which the power flow is controlled by one converter 241, on one side of the front side or the rear side equipped with a plurality of wheels, it is possible to integrally control the power flow with respect to the plurality of motors 231 and 232 provided on the same side of the wheel.

FIG. 5 is block diagrams for schematically illustrating a system for battery management of an electric mobility having three or more batteries according to embodiments of the present disclosure.

Referring to FIG. 5(a), a system 300 for battery management of the electric mobility according to an embodiment of the present disclosure may include three batteries 321, 322, and 323 as well as a generator 310, a control unit 350, and an interface 360.

Further, three converters 341, 342, and 343 may be provided to correspond one-to-one with the three batteries 321, 322, and 323. In addition, three motors 331, 332, and 333 may be connected to the batteries 321, 322, and 323 and the converters 341, 342, and 343, respectively.

In the exemplary embodiments in which three batteries 321, 322, and 323 are provided as described above, the method for battery management of the electric mobility may be implemented so that the SOCs of the three batteries 321, 322, and 323 are the same or substantially the same as each other.

That is, according to the method for battery management described above, the control unit or controller 350 (e.g. a processor) may collect the SOC information of the three batteries 321, 322, and 323. Further, after determining whether the difference between the SOCs of a battery having the highest SOC and a battery having the lowest SOC exceeds a predetermined threshold value, the control unit 350 may control the power flow of at least one of the converters 341, 342, and 343 to control the SOCs of the three batteries 321, 322, and 323 to be the same or substantially the same as each other.

Referring to FIG. 5(b), the system 400 for battery management of the electric mobility according to an embodiment of the present disclosure may include four batteries 421, 422, 423, and 424 as well as a generator 410, a controller 450, and an interface 460.

In the embodiment of FIG. 5(b), four converters 441, 442, 443, and 444 may be provided to correspond one-to-one with the four batteries 421, 422, 423, and 424, and the four motors 431, 432, 433 and 434 may be connected to the batteries 421, 422, 423, and 424 and the converters 441, 442, 443, and 444, respectively.

In the embodiment illustrated in FIG. 5(b) in which four batteries are provided, the method for battery management described above may be implemented so that the SOCs of the four batteries 421, 422, 423, and 424 are the same or substantially the same as each other.

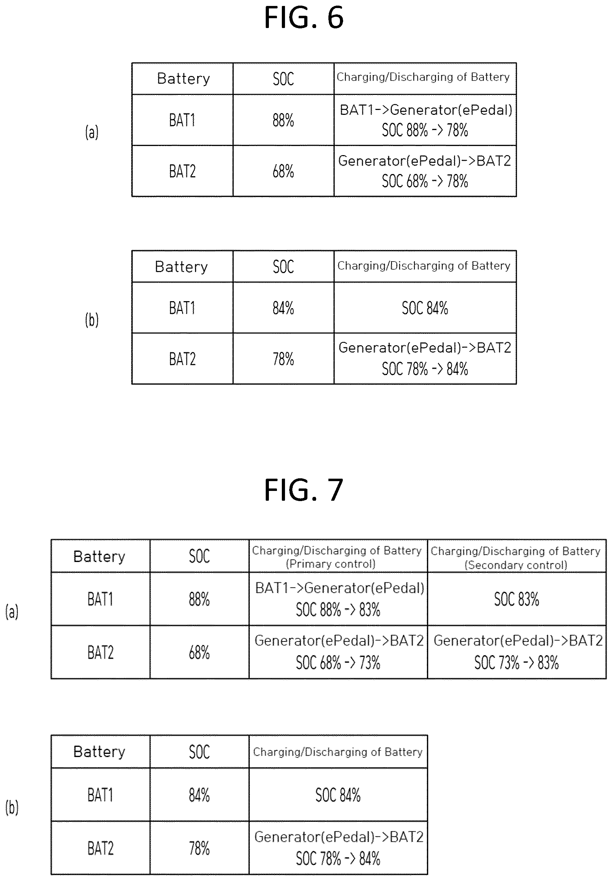

FIGS. 6 to 9 illustrate experimental examples of controlling SOCs of a plurality of batteries by a method for battery management of an electric mobility according to an embodiment of the present disclosure. In FIGS. 6 to 9, the predetermined threshold value for the difference between the SOC of the battery having the highest SOC and the SOC of the battery having the lowest SOC is set to 10% as an example. However, the present disclosure is not limited thereto, and a predetermined threshold value may be set differently as needed.

FIG. 6 is experimental examples of a method for battery management of an electric mobility according to a first embodiment of the present disclosure in an exemplary embodiment in which a system for battery management of the electric mobility has two batteries. For example, these experimental examples of FIG. 6 are implemented based on the embodiments for controlling two batteries BAT1 and BAT2 in the systems of FIG. 4.

FIG. 6(a) shows a case that the difference (20%) between the SOC (88%) of the battery BAT1 having the highest SOC and the SOC (68%) of the battery BAT2 having the lowest SOC among the two batteries exceeds the predetermined threshold value (10%).

Since the difference between the SOCs of the battery BAT1 having the highest SOC and the battery BAT2 having the lowest SOC among the two batteries exceeds the predetermined threshold value, for the control of the battery BAT2 having the lowest SOC, the power may be supplied from the generator (ePedal) to the battery BAT2 so that charging of the battery BAT2 may be performed. Meanwhile, for the control of the battery BAT1 having the highest SOC, the power may be supplied from the battery BAT1 to the generator (ePedal) so that discharging of the battery BAT1 may be performed.

Here, according to the first embodiment of the present disclosure illustrated in FIG. 6(a), since the charging and the discharging are performed until the SOCs of the two batteries are the same or substantially the same as each other, the two batteries BAT1 and BAT2 may be balanced at 78% where the SOCs of the two batteries become the same.

FIG. 6(b) shows a case that the difference (8%) between the SOCs of the battery BAT1 having the highest SOC and the battery BAT2 having the lowest SOC does not exceed the predetermined threshold value (10%).

In this case, since the difference in the SOCs does not exceed the predetermined threshold value, the discharging of the battery BAT1 having the highest SOC is not performed, and only the charging of the battery BAT2 having the lowest SOC from the generator (ePedal) may be performed. On the other hand, since the battery BAT2 is charged until the SOCs of the two batteries are the same or substantially the same as each other, the SOCs of the two batteries may be balanced at 84% corresponding to the SOC of the battery BAT1 having the highest SOC.

FIG. 7 is experimental examples of a method for battery management of an electric mobility according to a second embodiment of the present disclosure in an example in which a system for battery management of the electric mobility has two batteries.

FIG. 7(a) shows a case that the SOC of the battery BAT1 having the highest SOC is 88%, and the SOC of the battery BAT2 having the lowest SOC is 68% among the two batteries as in FIG. 6(a).

Since the difference (20%) of the SOCs of the two batteries exceeds the predetermined threshold value (10%), a control of discharging the battery BAT1 having the highest SOC to the generator and a control of charging the battery BAT2 having the lowest SOC from the generator may be performed.

However, unlike the first embodiment shown in FIG. 6, since the control of the discharging of the battery BAT1 and the control of the charging of the battery BAT2 are performed only until the difference in SOCs of the two batteries BAT1 and BAT2 is equal to or less than the predetermined threshold value (10%), the initial control of the two batteries BAT1 and BAT2 may be terminated when the difference in SOCs reaches the predetermined threshold value (10%).

That is, the charging control and the discharging control may be terminated when the battery BAT1 having the highest SOC is discharged until the SOC of the battery BAT1 reaches 83%, and the battery BAT2 having the lowest SOC is charged until the SOC of the battery BAT2 reaches 73%.

Meanwhile, since the SOCs of the two batteries BAT1 and BAT2 are not the same as each other after the initial control of the two batteries BAT1 and BAT2, one or more subsequent controls may be performed until the SOCs become the same. In the subsequent control, since the difference in the SOCs (10%) between the two batteries is equal to or less than the predetermined threshold value, only the charging control of the battery BAT2 having the lowest SOC may be performed.

Accordingly, by the subsequent control, the SOCs of the two batteries BAT1 and BAT2 may be balanced at 83%, which corresponds to the SOC of the battery BAT1 having the highest SOC.

That is, compared to the experimental example according to the first embodiment of Fig. 6(a), by performing the balancing control one more time, the SOCs can be balanced at the higher level (78% -> 83%) according to the exemplary embodiment of FIG. 7(a).

FIG. 7(b) shows a case that the difference (8%) between the SOCs of the battery BAT1 having the highest SOC and the battery BAT2 having the lowest SOC does not exceed the predetermined threshold value (10%). In this case, since only the charging control of the battery BAT2 having the lowest SOC is performed, the same results may be obtained as in the experimental example of the first embodiment of FIG. 6(b).

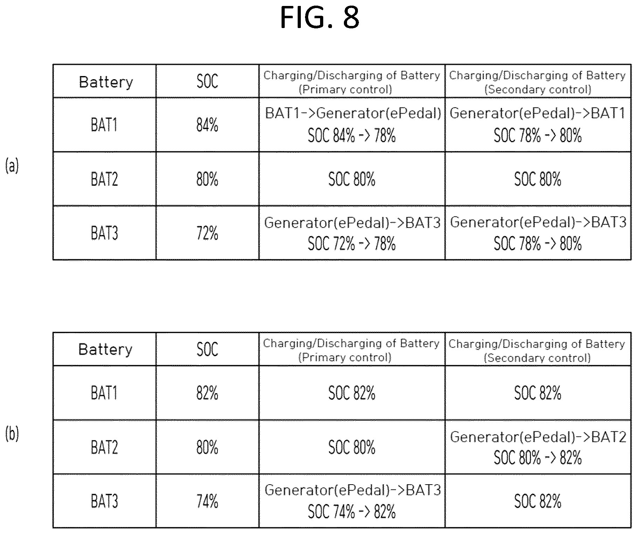

FIG. 8 is experimental examples of a method for battery management of an electric mobility according to a first embodiment of the present disclosure in an example in which a system for battery management of the electric mobility has three batteries. For example, these experimental examples of FIG. 8 are implemented based on the embodiments for controlling three batteries BAT1, BAT2, BAT3 in the system of FIG. 5(a).

The experimental example of FIG. 8(a) shows that the difference (12%) between the SOC (84%) of the battery BAT1 having the highest SOC and the SOC (72%) of the battery BAT3 having the lowest SOC among the three batteries BAT1, BAT2, BAT3 exceeds the predetermined threshold value (10%).

In this case, since the difference between the SOCs of the battery BAT1 having the highest SOC and the battery BAT3 having the lowest SOC among the three batteries BAT1, BAT2, BAT3 exceeds the predetermined threshold value, for the control of the battery BAT3 having the lowest SOC, the power may be supplied from the generator (ePedal) to the battery BAT3 to charge the battery BAT3. Meanwhile, for the control of the battery BAT1 having the highest SOC, the power may be supplied from the battery BAT1 to the generator (ePedal) so that the discharging of the battery BAT1 may be performed.

Here, according to the first embodiment of the present disclosure of FIG. 8(a), since the charging of the battery BAT3 and the discharging of the battery BAT1 are performed until the SOCs of the batteries BAT1 and BAT3 are the same as each other, in an initial control, the SOCs of the two batteries BAT1, BAT3 may be balanced at 78% in which the SOCs of the two batteries BAT1 and BAT3 become the same as each other.

On the other hand, in case that there are three batteries, since the method for battery management according to the embodiment of the present disclosure is performed until the SOCs of the three batteries BAT1, BAT2, BAT3 are the same as each other, if the SOC of another battery BAT2 is not the same as the two batteries BAT1 and BAT3 even after the initial control according to the first embodiment, an additional or subsequent control (e.g. a secondary control) may be performed.

In the embodiment of FIG. 8(a), since a battery having the highest SOC is changed to the battery BAT2 (SOC 80%) in the subsequent control, the difference between the SOC (80%) of the battery BAT2 having the highest SOC and the SOC (78%) of the battery BAT1 or BAT3 having the lowest SOC is equal to or less than the predetermined threshold value (10%).

Therefore, in the subsequent control, only the charging control from the generator to the batteries BAT1 and BAT3 having the lowest SOC is performed, and the SOCs of the three batteries BAT1, BAT2, BAT3 may be balanced at 80% in which the SOCs of all batteries BAT1, BAT2, BAT3 become the same as each other.

The experimental example of FIG. 8(b) shows that the difference (8%) between the SOC (82%) of the battery BAT1 having the highest SOC and the SOC (74%) of the battery BAT3 having the lowest SOC among three batteries BAT1, BAT2, BAT3 is equal to or less than the predetermined threshold value (10%).

In this case, since the difference in the SOCs does not exceed the predetermined threshold value, the battery BAT1 having the highest SOC is not discharged, and only the charging of the battery BAT3 is performed by supplying the power from the generator (ePedal) to the battery BAT3 having the lowest SOC. On the other hand, since the charging of the battery BAT3 is performed until the SOCs of the two batteries BAT1 and BAT3 are the same as each other, in the initial control, the SOCs of the two batteries BAT1 and BAT3 may be balanced at 82% which corresponds to the SOC of the battery BAT1 having the highest SOC.

Meanwhile, in the subsequent control, the batteries having the highest SOC are the batteries BAT1 and BAT3 (SOC 82%), and the difference (2%) between the SOC (82%) of the battery BAT1, BAT3 having the highest SOC and the SOC (80%) of the battery BAT2 having the lowest SOC is equal to or less than the predetermined threshold value (10%), only the charging of the battery BAT2 may be performed by supplying the power from the generator to the battery BAT2 having the lowest SOC. Accordingly, the SOCs of the three batteries BAT1, BAT2, BAT3 may be balanced at 82% so that the SOCs of all the batteries BAT1, BAT2, BAT3 can become the same as each other.

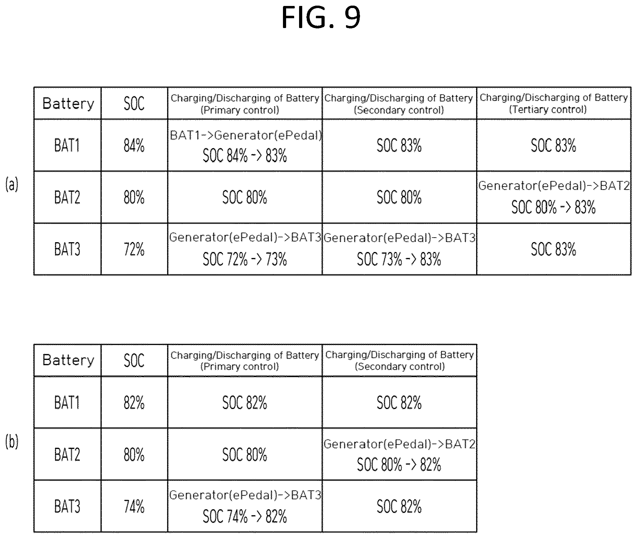

FIG. 9 is experimental examples of a method for battery management of an electric mobility according to a second embodiment of the present disclosure in an example in which a system for battery management of the electric mobility has three batteries. For example, these experimental examples are implemented based on the embodiments for controlling three batteries BAT1, BAT2, BAT3 in the system of FIG. 5(a).

The experimental example of FIG. 9(a) shows that the difference (12%) between the SOC (84%) of the battery BAT1 having the highest SOC and the SOC (72%) of the battery BAT3 having the lowest SOC (72%) among three batteries BAT1, BAT2, BAT3 exceeds the predetermined threshold value (10%).

In this case, since the difference between the SOCs of the battery BAT1 having the highest SOC and the battery BAT3 having the lowest SOC among the three batteries BAT1, BAT2, BAT3 exceeds the predetermined threshold value, for the control of the battery BAT3 having the lowest SOC, the charging of the battery BAT3 may be performed by supplying the power from the generator (ePedal) to the battery BAT3. Meanwhile, for the control of the battery BAT1 having the highest SOC, the discharging of the battery BAT1 may be performed by supplying the power from the battery BAT1 to the generator (ePedal).

Here, according to the second embodiment of the present disclosure of FIG. 9(b), since the charging of the battery BAT3 and the discharging of the battery BAT1 are performed until the difference in SOCs between the two batteries BAT1 and BAT3 becomes equal to or less than the predetermined threshold value, the initial control may be terminated at when the difference in the SOCs of the two batteries BAT1 and BAT3 reaches the predetermined threshold value. That is, the charging of the battery BAT3 and the discharging of the battery BAT1 may be terminated when the SOC of the battery BAT1 having the highest SOC reaches 83% and the SOC of the battery BAT3 having the lowest SOC reaches 73%.

Meanwhile, in the subsequent control, since the difference (10%) between the SOC (83%) of the battery BAT1 having the highest SOC and the SOC (73%) of the battery BAT3 having the lowest SOC is equal to or less than the predetermined threshold value (10%), only the charging of the battery BAT3 may be performed by supplying the power from the generator (ePedal) to the battery BAT3 having the lowest SOC. By this charging control, the SOCs of the two batteries BAT1 and BAT3 may be balanced at 83% in which the SOCs of the two batteries BAT1 and BAT3 are the same as each other.

Meanwhile, in case that the electric mobility has three batteries, since the method for battery management according to the embodiment of the present disclosure is performed until the SOCs of the three batteries become the same or substantially the same as each other, as long as the SOC of another battery BAT2 is not the same as the SOCs of the two batteries BAT1 and BAT3 even after the subsequent control is terminated, another subsequent control may be performed.

In the another sequent control, since the difference (3%) between the SOC (83%) of the battery BAT1, BAT3 having the highest SOC and the SOC (80%) of the battery BAT2 having the lowest SOC is equal to or less than the predetermined threshold value (10%), the charging of the battery BAT2 may be performed by supplying the power from the generator (ePedal) to the battery BAT2 having the lowest SOC. Accordingly, the SOCs may be balanced at 83% in which the SOCs of all the batteries BAT1, BAT2, BAT3 become the same as each other.

That is, compared to the experimental examples according to the first embodiment of FIG. 8(a), by performing the balancing control one more time, the SOCs of the batteries BAT1, BAT2, BAT3 can be balanced at the higher level (80% -> 83%) according to the embodiment of FIG. 9(a).

The experimental example of FIG. 9(b) shows that the difference (8%) between the SOC (82%) of the battery BAT1 having the highest SOC and the SOC (74%) of the battery BAT3 having the lowest SOC among three batteries BAT1, BAT2, BAT3 is equal to or less than the predetermined threshold value (10%).

In this case, in the initial control, only the charging control of the battery BAT3 having the lowest SOC may be performed, and the SOCs of the two batteries BAT1, BAT3 may be balanced at 82% which corresponds to the SOC of the battery BAT1 having the highest SOC.

Further, in the subsequent control, only the charging control of the battery BAT2 having the lowest SOC may be performed, and the SOCs of all batteries BAT1, BAT2, BAT3 may be balanced at 82% which corresponds to the SOC of the battery BAT1, BAT3 having the highest SOC. That is, the same results are obtained as the experimental example of the first embodiment of FIG. 8(b).

As described with reference to the above experimental examples, according to the experimental examples of the method for battery management according to the first embodiment of the present disclosure shown in FIGS. 6 and 8, in the case that the difference in the SOCs exceeds the threshold value, the SOCs of all the batteries may be balanced with only one control cycle in case of two batteries, and with only two controls in case of three batteries, and thus, it is possible to rapidly balance the SOCs of the batteries.

On the other hand, according to the experimental examples of the method for battery management according to the second embodiment of the present disclosure shown in FIGS. 7 and 9, in the case that the difference in the SOCs exceeds the threshold value, although the number of controls may be increased compared to the cases of the first embodiment (e.g. two control cycles in case of two batteries and three control cycles in case of three batteries), the second embodiment of the present disclosure can balance the SOCs at the higher level than the first embodiment of the present disclosure .

As described above, according to some embodiments of the present disclosure, in an electric mobility including a plurality of batteries, it is possible to provide a method and system for battery management capable of rapidly and effectively balancing the SOCs of the plurality of batteries using bidirectional converters.

Moreover, according to certain embodiments of the present disclosure, an electric mobility can be driven by effectively balancing the SOCs of the plurality of batteries, thereby preventing the maximum torque and output from being reduced during the driving of the electric mobility due to the imbalance of the SOCs. As a result, it is possible to drive the electric mobility at the maximum output for extended time.

The above description of the present disclosure is for illustrative purposes, and those skilled in the art may understand that it can be easily modified into other specific forms without changing the technical spirit or essential features of the present disclosure. Therefore, the embodiments described above should be understood as illustrative in all respects and not limiting. For example, each component described as a single type may be implemented in a distributed manner, and similarly, components described as distributed may be implemented in a combined form.

The scope of the present disclosure is indicated by the following claims rather than the above detailed description, and all changes or modifications derived from the meaning and scope of the claims and equivalent concepts should be interpreted to be included in the scope of the present disclosure.

### EXPLANATION OF REFERENCE

100, 200, 300, 400: Battery management system
110, 210, 310, 410: Generator (ePedal)
121, 122, 221, 222, 321, 322, 323, 421, 422, 423, 424: Battery
131, 132, 231, 232, 233, 331, 332, 333, 431, 432, 433, 434: Motor
141, 142, 241, 242, 341, 342, 343, 441, 442, 443, 444: Converter
150, 250, 350, 450: Control unit
160, 260, 360, 460: Interface

## Claims

1. A method for battery management of an electric mobility, the method comprising:
receiving information on states of charge (SOCs) of a plurality of batteries included in the electric mobility;
determining whether a difference between a SOC of a first battery having a highest SOC and a SOC of a second battery having a lowest SOC among the plurality of batteries exceeds a predetermined threshold value; and
controlling charge and/or discharge of at least one of the plurality of batteries by controlling power flow of at least one converter among a plurality of converters connected to the plurality of batteries.

2. The method of claim 1, wherein the plurality of converters are bidirectional converters, and the plurality of converters include a first bidirectional converter connected to the first battery and a second bidirectional converter connected to the second battery.

3. The method of claim 2, wherein the controlling of the charge and/or the discharge of at least one of the plurality of batteries comprises, if the difference between the SOC of the first battery and the SOC of the second battery exceeds the predetermined threshold value, controlling charge or discharge of the first battery and the second battery by controlling power flows of the first bidirectional converter and the second bidirectional converter.

4. The method of claim 2, wherein the controlling of the charge and/or the discharge of at least one of the plurality of batteries comprises, if the difference between the SOC of the first battery and the SOC of the second battery does not exceed the predetermined threshold value, charging the second battery having the lowest SOC by supplying power from a generator to the second battery by controlling only power flow of the second bidirectional converter until the SOC of the first battery and the SOC of the second battery become substantially identical to each other.

5. The method of claim 3, wherein the controlling of the charge and/or the discharge of at least one of the plurality of batteries includes discharging the first battery having the highest SOC by supplying power from the first battery to a generator by controlling power flow of the first bidirectional converter and charging the second battery having the lowest SOC by supplying power from the generator to the second battery by controlling power flow of the second bidirectional converter until the SOC of the first battery and the SOC of the second battery become substantially identical to each other.

6. The method of claim 3, wherein the controlling of the charge and/or the discharge of at least one of the plurality of batteries includes discharging the first battery having the highest SOC by supplying power from the first battery to a generator by controlling power flow of the first bidirectional converter and charging the second battery having the lowest SOC by supplying power from the generator to the second battery by controlling power flow of the second bidirectional converter until the difference between the SOC of the first battery and the SOC of the second battery becomes equal to or less than the predetermined threshold value.

7. The method of any one of claims 1 to 6, further comprising:
after the controlling of the charge and/or the discharge of at least one of the plurality of batteries, determining whether all of the SOCs of the plurality of batteries are substantially identical to each other,
wherein the controlling of the charge and/or the discharge of at least one of the plurality of batteries is performed until all of the SOCs of the plurality of batteries become substantially identical to each other.

8. The method of claim 7, further comprising:
after determining whether all of the SOCs of the plurality of batteries are substantially identical to each other, determining whether a system for the battery management of the electric mobility is normal or abnormal.

9. The method of claim 8, wherein the determining of whether the system for the battery management of the electric mobility is normal or abnormal includes determining that the system for the battery management of the electric mobility is abnormal when a current generated by a generator is overcurrent, when a voltage of at least one of the plurality of batteries is out of a predetermined range of a usable voltage, or when a temperature of at least one component of the system for the battery management of the electric mobility is out of an operatable temperature range.

10. The method of claim 8, further comprising, if it is determined that the system for the battery management of the electric mobility is abnormal, outputting a warning for notifying abnormality of the system for the battery management of the electric mobility to a driver.

11. A system for battery management of an electric mobility, the system comprising:
a generator configured to generate voltage by drive of a pedal;
a plurality of batteries;
a plurality of motors operably connected to at least one of wheels of the electric mobility to provide rotational force to at least one of the wheels;
a plurality of converters configured to convert voltages of the plurality of batteries; and
a controller configured to receive information on states of charge (SOCs) of the plurality of batteries, determine whether a difference between a SOC of a first battery having a highest SOC and a SOC of a second battery having a lowest SOC among the plurality of batteries exceeds a predetermined threshold value, and control charge or discharge of at least one of the plurality of batteries by controlling power flow of at least one of the plurality of converters.

12. The system of claim 11, wherein the plurality of converters are bidirectional converters, and the plurality of converters include a first bidirectional converter connected to the first battery and a second bidirectional converter connected to the second battery.

13. The system of claim 12, wherein the controller is configured to, if the difference between the SOC of the first battery and the SOC of the second battery exceeds the predetermined threshold value, control power flows of the first bidirectional converter and the second bidirectional converter to control charge and/or discharge of the first battery and the second battery.

14. The system of claim 12, wherein the controller is configured to, if the difference between the SOC of the first battery and the SOC of the second battery does not exceed the predetermined threshold value, charging the second battery having the lowest SOC by supplying power from the generator to the second battery by controlling only power flow of the second bidirectional converter until the SOC of the first battery and the SOC of the second battery become substantially identical to each other.

15. The system of any one of claims 11 to 14, wherein the controller is configured to:
control the charge and/or the discharge of at least one of the plurality of batteries until all of the SOCs of the plurality of batteries become substantially identical to each other,
if all of the SOCs of the plurality of batteries are substantially identical to each other, determine whether the system is normal or abnormal, and
if it is determined that the system is abnormal, output a warning for notifying abnormality of the system through an interface.
